# EUROPEAN PATENT APPLICATION

(11) **EP 4 424 650 A1**
(43) Date of publication of application: **04.09.2024**
(21) Application number: 22887461.6
(22) Date of filing: 18.10.2022
(51) Int. Cl.: C02F 11/04, C02F 3/28, C02F 1/52, C02F 11/12, C02F 11/20, B01D 53/00, C02F 3/12

(54) **SYSTEM FOR PRODUCING BIOGAS USING MIXED LIQUID OF DIGESTIVE FLUID TREATED WATER AND ORGANIC DRY SUBSTANCE**

(30) Priority: 25.10.2021 KR 20210142550
(71) Applicant: Na, Min Soo, Hwaseong-si, Gyeonggi-do 18251 (KR)
(72) Inventor: Na, Min Soo, Hwaseong-si, Gyeonggi-do 18251 (KR)
(74) Representative: Hauck Patentanwaltspartnerschaft mbB
(86) International application number: PCT/KR2022/015829
(87) International publication number: WO 2023/075265

(57) **Abstract**

The present invention relates to a system capable of maximizing biogas production by mixing dry feed at a predetermined ratio with digestive fluid discharged from an anaerobic digestion tank, which is a front-end process of a wastewater treatment system, and then introducing it into a digestion tank. The present invention implements a new type of system which separates the digestive fluid discharged from an anaerobic digestion tank, which is a front-end process of the wastewater treatment system, into solid and liquid in a sedimentation tank, and then mixes treated water with dry feed at a predetermined ratio and reintroduces it into the digestion tank, and also introduces digested slime and sludge into dryer equipment, thereby providing a system for producing biogas using a mixed liquid of digestive fluid treated water and dry feed that can maximize the production of biogas (methane gas) to reduce energy costs, increase the production of dry substances to reduce waste disposal costs, and increase the resource recycling rate.

## Description

### [Technical Field]

The present invention relates to a system for producing biogas using a mixed liquid of digestive fluid treated water and dry feed (organic substance), and more specifically, to a system that can maximize biogas production by mixing a dry feed at a predetermined ratio with digestive fluid treated water discharged from an anaerobic digestion tank, which is a front-end process of a wastewater treatment system, and then adding the mixed liquid to a digestion tank.

### [Background Art]

Recently, modern society characterized by mass production and mass consumption is causing serious environmental pollution problems due to large amounts of waste. Representative environmental pollution problems include soil and water pollution due to large amounts of waste and air pollution due to mass consumption of energy.

Accordingly, in recent years, a drying method for drying organic waste such as food waste and utilizing it as a renewable energy resource has been in the spotlight. When drying the organic waste in this way to reduce the moisture content, excellent solid fuel having a calorific value of 3,000 to 4,000 kcal/kg or more may be obtained.

Equipment for drying the organic waste typically include a dryer of direct and indirect drying method using hot air and steam, a dryer of electromagnetic wave drying method using microwaves and the like.

During the process of drying the waste using these equipments, a high concentration of condensed gas containing large amount of moisture and oil is inevitably generated. To process the condensed gas generated in this way, a condenser is installed in a discharge line of the dryer, and high concentration of condensed wastewater such as oil contained in the condensed gas is separated and removed using the condenser installed in this way.

Usually, the gas emitted in the process of drying the organic waste is sent to the condenser and subjected to condensation treatment. The condensed gas generated after the condensation treatment is incinerated in a deodorization combustion furnace which is a post-process, and the high concentration of condensed wastewater is taken outside or purified in its own wastewater treatment plant.

However, since a significant amount of high-concentration food wastewater generated during the organic waste pre-treatment process is taken outside and subjected to consignment treatment in an external wastewater treatment plant, there is a significant burden in terms of costs.

That is, the food wastewater discharged during the food waste pre-treatment process is not only high in concentration but also has a large discharge volume, such that consignment treatment costs are increased.

For example, currently, a large amount of food wastewater generated in the process of pre-treating the organic waste such as food waste is mostly subjected to consignment treatment in an external treatment plant after the oil content is removed in a three-phase separator.

Since this food wastewater contains high-concentration organic substance (BOD, COD), organic acids and SS components, the T-N and T-D concentrations of the treated water are high when aerobically (biologically) treating the treated water that has undergone anaerobic treatment. Therefore, there is a lot of costs and difficulty in reprocessing this food wastewater to an allowable discharge standard or less. Prior

### [Prior Art Document]

### [Patent Document]

(Patent Document 1) Korean Patent Laid-Open Publication No. 10-2019-0050474
(Patent Document 2) Korean Patent Laid-Open Publication No. 102019-0050477
(Patent Document 3) Korean Patent Registration No. 10-1751502
(Patent Document 4) Korean Patent Registration No. 101845457

### [Summary of Invention]

### [Problems to be Solved by Invention]

Accordingly, in consideration of the above-mentioned circumstances, the present invention is intended to produce a large amount of biomass to be used as an energy source, which is generated when introducing a high-concentration organic substance combined with dry feed discharged during the drying process of food waste into an anaerobic digestion tank, then digesting and decomposing it in the anaerobic digestion tank.

Therefore, it is an object of the present invention to implement a new type of system which separates the digestive fluid discharged from an anaerobic digestion tank after digesting and decomposing high-concentration organic substance combined with dry feed in an anaerobic digester into solid and liquid in a sedimentation tank, and then mixes treated water with the dry feed again at a predetermined ratio and reintroduces it into the digestion tank, and also introduces digested slime and sludge into dryer equipment, thereby providing a system for producing biogas using a mixed liquid of digestive fluid treated water and dry feed that can maximize the production of biogas (methane gas) to reduce energy costs, increase the production of dry substances to reduce waste disposal costs, and increase the resource recycling rate.

### [Means for Solving Problems]

To achieve the above object, the system for producing biogas using a mixed liquid of digestive fluid treated water and dry feed provided by the present invention has the following characteristics.

The system for producing biogas using a mixed liquid of digestive fluid treated water and dry feed includes: a mixed liquid tank configured to mix and store digestive fluid treated water and dry feed; a digestion tank configured to store and decompose the mixed liquid of digestive fluid treated water and dry feed discharged from the mixed liquid tank; a sedimentation tank configured to separate the digestive fluid discharged from the digestion tank into solid and liquid, then send digestive fluid treated water to the mixed liquid tank and send sludge to a storage tank; a gas holder configured to store methane gas discharged from the digestion tank; the storage tank configured to store digested slime discharged from the digestion tank and the sludge discharged from the sedimentation tank; a deodorization combustion furnace configured to use the methane gas discharged from the gas holder as a fuel; a power generation boiler configured to use the methane gas discharged from the gas holder as a fuel; and a dryer configured to dry food waste as well as the digested slime and sludge discharged from the storage tank.

Therefore, the system for producing biogas using a mixed liquid of digestive fluid treated water and dry feed is characterized in that: the digestive fluid treated water prepared by separating the digestive fluid discharged from the digestion tank after decomposition into solid and liquid, and the dry feed are mixed at a predetermined ratio in the mixing tank, then the mixture is introduced into the digestion tank to be treated; the methane gas produced in the digestion tank is used as a fuel for the deodorization combustion furnace and the power generation boiler; and the digested slime discharged from the digestion tank and the sludge discharged from the sedimentation tank are introduced into the dryer to be dried.

Here, the system for producing biogas using a mixed liquid of digestive fluid treated water and dry feed may include: as a means for cooling condensed wastewater discharged from a condenser for condensing which is configured to condense an exhaust gas discharged from the dryer, a condenser for heat exchange through which the condensed wastewater inflows and outflows, wherein heat exchange between the condensed wastewater and circulating water are performed inside thereof; a circulating water tank configured to store the circulating water supplied to the condenser for heat exchange; a circulating water pump configured to pump the circulating water; and a circulating water cooling tower configured to cool the circulating water discharged from the condenser for heat exchange and then send it to the circulating water tank.

The system for producing biogas using a mixed liquid of digestive fluid treated water and dry feed may include: a condenser for condensing configured to condense the exhaust gas discharged from the dryer; a condensed wastewater tank configured to store the condensed wastewater discharged from the condenser for condensing; a wastewater treatment unit which includes a digestion tank, an aeration tank, a sedimentation tank, and advanced treatment tank as a means for treating the condensed wastewater discharged after the condensed wastewater discharged from the condensed wastewater tank is cooled again in a condenser for cooling; and a treated water tank configured to store the treated water discharged from the wastewater treatment unit and then supply it to the condenser for condensing as use of circulating water, therefore, the condensed wastewater discharged from the condenser for condensing may be prepared as final treated water through a comprehensive wastewater treatment process, and the resulting treated water may be reused as circulating water for condensing the exhaust gas in the condenser for condensing.

In addition, the system for producing biogas using a mixed liquid of digestive fluid treated water and dry feed may include: a water supply tank configured to store steam condensate discharged from the dryer and process water supplied from a water service; and a water supply line connected between the water supply tank and the deodorization combustion furnace; and a water supply pump installed on the water supply line, therefore, the steam condensate discharged from the dryer may be used as water supply for the deodorization combustion furnace.

In a preferred embodiment, the steam produced by the power generation boiler may be introduced into the dryer and used for self-use, such as drying food waste, digested slime, and sludge, or for sale to an external party.

### [Advantageous Effects]

The system for producing biogas using a mixed liquid of digestive fluid treated water and dry feed provided by the present invention has the following effects.

First, by applying a new food waste treatment system in which the digestive fluid discharged from the anaerobic digestion tank, which is a front-end process of the wastewater treatment system, and dry feed are mixed at a predetermined ratio and then introduced into the digestion tank to produce methane gas that can be used as a fuel for the deodorization combustion furnace and fuel for the power generation boiler, as well as, the digested slime discharged from the anaerobic digestion tank and the sludge discharged from the sedimentation tank are introduced into the dryer to be dried, it is possible to reduce energy costs by maximizing biogas production, and reduce waste disposal costs by increasing the production of solid fuel or compost and relatively decreasing the amount of waste.

Second, by reintroducing the dry feed, which is a raw material of organic substance, operation of the drying equipment may be smoothly maintained, for example, feed inventory in times when consignment (sale) processing of feed is difficult may be minimized, etc.

Third, by reusing the condensed wastewater discharged from the condenser for condensing as process water through the comprehensive wastewater treatment process, that is, by reusing the final treated water, it is possible to significantly reduce water service costs related to the system operation.

Fourth, waste disposal costs may be reduced according to resource recycling obtained by solid fuel and composting of the final dried material, and the production of dried organic waste products may be increased, and self-treatment of dry material and wastewater generated during production activities may be increased, thereby contributing to the government's policy of suppressing pollutant (waste) emissions and resource circulation policy by reducing the discharge amount of pollutants due to recycling.

### [Brief Description of Drawings]

FIG. 1 is a process diagram showing a system for producing biogas using a mixed liquid of digestive fluid treated water and dry feed according to an embodiment of the present invention.
FIG. 2 is a process diagram showing an operating state of the system for producing biogas using a mixed liquid of digestive fluid treated water and dry feed according to an embodiment of the present invention.

### [Mode for Carrying out Invention]

Hereinafter, the present invention will be described in detail with reference to the accompanying drawings.

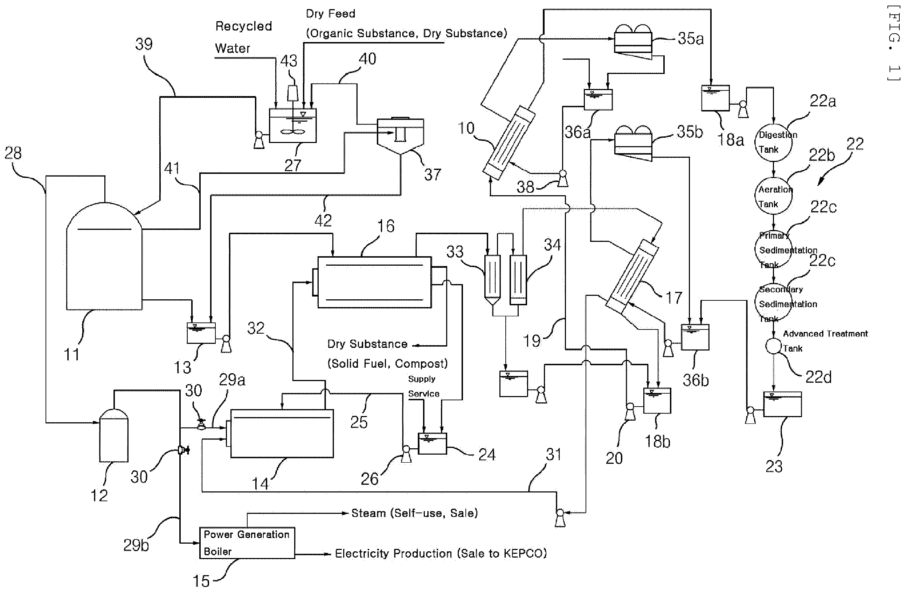

FIG. 1 is a process diagram showing a system for producing biogas using a mixed liquid of digestive fluid treated water and dry feed according to an embodiment of the present invention.

As shown in FIG. 1, the system for producing biogas using a mixed liquid of digestive fluid treated water and dry feed includes a mixed liquid tank 27 as a means for mixing and storing digestive fluid treated water and dry feed.

The dry feed (organic dry substance) and digestive fluid treated water may be supplied and stored in the mixed liquid tank 27, and if necessary, recycled water provided from a treated water tank 23 of a wastewater treatment unit 22 may be supplied and stored therein.

This mixed liquid tank 27 and a digestion tank 11 are connected to a mixed liquid line 39, and the mixed liquid tank 27 and a sedimentation tank 37 are connected to a digestive fluid treated water line 40, such that the digestive fluid treated water may be supplied from the sedimentation tank 37 side to the mixed liquid tank 27, and may be supplied from the mixed liquid tank 27 side to the digestion tank 11.

Accordingly, the dry feed and digestive fluid treated water stored in the mixed liquid tank 27 are mixed while agitating by an agitator 43, and the mixed liquid obtained by mixing may be introduced into the digestion tank 11 along the mixed liquid line 39 when operating a pump.

Here, the dry feed and digestive fluid treated water mixed in the mixed liquid tank 27 may be mixed at a predetermined ratio, for example, at a concentration of about 10 to 20% based on the quality level of food wastewater.

That is, it is preferable that the quality level of food wastewater is maintained at a concentration of about 100,000 to 200,000 mg/L based on the management concentration (range) of organic substance (wastewater) introduced into the digestion tank 11 by mixing the dry feed and digestive fluid treated water at an appropriate ratio.

In addition, the system for producing biogas using a mixed liquid of digestive fluid treated water and dry feed includes the sedimentation tank 37 as a means for separating the digestive fluid discharged from the digestion tank 11 into solid and liquid.

This sedimentation tank 37 may be connected to the digestion tank 11 side through the digestive fluid line 41 so as to receive the digestive fluid, may be connected to the mixed liquid tank 27 through the digestive fluid treated water line 40 so as to supply the digestive fluid treated water to the mixed liquid tank 27, and may be connected to a storage tank 13 side through a sludge line 42 so as to supply the sludge to the storage tank 13.

Accordingly, when the digestive fluid (e.g., the supernatant separated upward in the digestion tank) discharged from the digestion tank 11 is supplied to the sedimentation tank 37, solid-liquid separation into digestive fluid treated water and sludge may be performed inside the sedimentation tank 37. In this case, the supernatant separated upward, that is, the digestive fluid treated water will be sent to the mixed liquid tank 27 along the digestive fluid treated water line 40, and the sludge that settles down will be sent to the storage tank 13 along the sludge line 42.

In addition, the system for producing biogas using a mixed liquid of digestive fluid treated water and dry feed includes the digestion tank 11 configured to decompose the mixed liquid discharged from the mixed liquid tank 27.

The digestion tank 11 serves to decompose the mixed liquid transferred from the mixed liquid tank 27, for example, a mixed liquid of dry feed and digestive fluid treated water, or a mixed liquid of dry feed, digestive fluid treated water and recycled water.

This digestion tank 11 includes a mixed liquid inlet into which the mixed liquid inflows, a methane gas outlet from which the methane gas outflows, and an upper digestive fluid outlet from which the digestive fluid outflows and a lower digested slime outlet from which the digested slime outflows.

In this case, the mixed liquid inlet of the digestion tank 11 is connected to the mixed liquid line 39 extending from the mixed liquid tank 27 side, the methane gas outlet is connected to a methane gas line 28 extending to a gas holder 12 side, the digestive fluid outlet is connected to the digestive fluid line 41 extending to the sedimentation tank 37 side, and the digested slime outlet is connected to the storage tank 13 side through a line.

In addition, the interior of digestion tank 11, where the mixed liquid is decomposed, may be maintained at a temperature of about 30 to 40°C.

Accordingly, when the mixed liquid inflows into the digestion tank 11, the mixed liquid at this time stays inside the digestion tank 11 for a predetermined period of time, and methane gas generated through this retention and decomposition process is collected at an upper section inside of the digestion tank 11. Among the mixed liquids stored inside the digestion tank 11, the digestive fluid is collected in an upper layer of water level, and the digested slime with a large weight is collected in a lower layer, respectively.

Ultimately, the methane gas in the digestion tank 11 is sent to the gas holder 12 through the methane gas line 28, and the digestive fluid and digested slime are sent to the sedimentation tank 37 and the storage tank 13 through each line.

In addition, the system for producing biogas using a mixed liquid of digestive fluid treated water and dry feed includes the gas holder 12 configured to store the methane gas discharged from the digestion tank 11.

The gas holder 12 serves to collect the methane gas transferred from the digestion tank 11 and send it to each supply place.

This gas holder 12 includes a methane gas inlet into which the methane gas inflows and a methane gas outlet from which the methane gas outflows. In this case, the methane gas inlet is connected to the methane gas line 28 extending from the digestion tank 11 side, and the methane gas outlet is connected to two methane gas supply lines 29a and 29b, which are respectively connected to a deodorization combustion furnace 14 side and a power generation boiler 15 side.

In addition, manual or automatic valves 30 are respectively installed in the methane gas supply lines 29a and 29b, and an amount of methane gas supplied to the deodorization combustion furnace 14 side and the power generation boiler 15 side may be controlled according to opening and closing operations of each valve 30 installed in this way.

Accordingly, the methane gas discharged along the methane gas line 28 is stored inside the gas holder 12, and the methane gas stored in this way may be supplied to the deodorization combustion furnace 14 side and/or the power generation boiler 15 side according to the opening and closing operations of the valves 30 to be used as a fuel, etc.

Here, the amount of methane gas supplied from the gas holder 12 to the deodorization combustion furnace 14 side and the power generation boiler 15 side is preferably set to be 50%, respectively.

In addition, the system for producing biogas using a mixed liquid of digestive fluid treated water and dry feed includes the storage tank 13 configured to store the digested slime discharged from the digestion tank 11 and the sludge discharged from the sedimentation tank 37.

The storage tank 13 serves to store the sludge discharged from the sedimentation tank 37 as well as the digested slime discharged from the digestion tank 11.

This storage tank 13 is connected with two lines extending from the digestion tank 11 side and the sedimentation tank 37 side and one line extending to a dryer 16 side. In this case, and a pump is installed on the line extending to the dryer 16 side.

Accordingly, the digested slime discharged from the digestion tank 11 and the sludge discharged from the sedimentation tank 37 are stored in the storage tank 13, and when operating the pump, the digested slime and sludge in the storage tank 13 are introduced into the dryer 16 to be dried.

In addition, the system for producing biogas using a mixed liquid of digestive fluid treated water and dry feed includes the deodorization combustion furnace 14 configured to use the methane gas discharged from the gas holder 12 as a fuel.

The deodorization combustion furnace 14 is a general deodorization combustor applied to dryer equipment to burn odors generated during the drying process, and is connected to the condenser 17 for condensing through a condensed gas line 31. A fan is installed on the condensed gas line 31.

In addition, the methane gas supply line 29a extending from the gas holder 12 is connected to the deodorization combustion furnace 14, and the methane gas supplied through a methane gas supply line 29a connected in this way may be used as an auxiliary fuel for the deodorization combustion furnace 14.

Accordingly, the exhaust gas from the dryer 16 is condensed through the condenser 17 for condensing, and the exhaust gas (condensed gas) generated during the condensation process is sent to the deodorization combustion furnace 14 through a condensed gas line 31 to be incinerated. Meanwhile, the methane gas supplied from the gas holder 12 may be provided to the deodorization combustion furnace 14 side, thus to be used as a heat source for odor combustion, that is, as an auxiliary fuel.

In particular, the deodorization combustion furnace 14 is characterized by using steam condensate discharged from the dryer 16 as water supply.

To this end, the system includes a water supply tank 24 configured to store process water supplied from the water service as well as steam condensate discharged from the dryer 16, a water supply line 25 connected between the water supply tank 24 and the deodorization combustion furnace 14, and a water supply pump 26 installed on the water supply line 25.

Accordingly, the steam condensate discharged from the dryer 16 and the process water supplied from the water service are stored and mixed in the water supply tank 24, and the water supply mixed in this way may be sent to the deodorization combustion furnace 14 along the water supply line 25 when operating the water supply pump 26, thus to be used as water supply.

In addition, the system for producing biogas using a mixed liquid of digestive fluid treated water and dry feed includes the power generation boiler 15 configured to use the methane gas discharged from the gas holder 12 as a fuel.

The power generation boiler 15 is connected to a methane gas supply line 29b extending from the gas holder 12. Thereby, the power generation boiler 15 may be operated using the methane gas supplied from the gas holder 12 as a fuel.

Some of the steam produced by the power generation boiler 15 is introduced into the dryer 16 to be used as a heat source for drying the food waste and digested slime (including sludge), or may be sold to nearby use places or to Korea Electric Power Corporation (KEPCO), etc. In addition, the steam produced in the power generation boiler 15 operates a steam turbine (not shown) to generate electricity, and all of the electricity produced in this way may be sold to KEPCO.

In addition, the system for producing biogas using a mixed liquid of digestive fluid treated water and dry feed includes the dryer 16 configured to dry the food waste as well as the digested slime and sludge discharged from the storage tank 13.

A conventional dryer 16 that dries the food waste in the dryer equipment, that is, the dryer 16 that dries the introduced food waste with steam may be utilized as the dryer 16.

The dryer 16 is connected to the deodorization combustion furnace 14 side through the steam line 32 to receive steam. Accordingly, the dryer 16 may dry the food waste using the high-temperature steam supplied from the deodorization combustion furnace 14 as a heat source.

The dry material discharged after drying in this dryer 16 may be used as a solid fuel, compost, etc., and the steam condensate generated during the drying process in the dryer 16 may be sent toward the water supply tank 24.

In addition, the exhaust gas generated during the drying process of the dryer 16 sequentially passes through a cyclone 33 and a trap 34. In this process, foreign substances, oil, and moisture contained in the exhaust gas are filtered out, and the exhaust gas passing through the trap 34 may be sent toward the condenser 17 for condensing.

The condenser 17 for condensing is a condenser configured to condense the exhaust gas discharged from the dryer 16, substantially the exhaust gas passing through the cyclone 33 and the trap 34, and serves to condense the high-temperature exhaust gas using low-temperature circulating water. In this case, a condenser used in general dryer equipment may be utilized as the condenser 17 for condensing.

This condenser 17 for condensing includes an exhaust gas inlet into which the exhaust gas inflows, a condensed gas outlet from which the condensed gas outflows after condensation, a circulating water inlet and a circulating water outlet for inflowing and outflowing the circulating water, and a drain for discharging the condensed wastewater.

In addition, the condenser 17 for condensing includes a circulating water cooling tower 35b, a circulating water tank 36, and a pump as a means for receiving the circulating water.

Accordingly, when operating the pump, the circulating water in the circulating water tank 36 is supplied into the condenser 17 for condensing and is subjected to heat exchange with the exhaust gas inside the condenser 17 for condensing. The circulating water that has completed heat exchange is cooled while passing through the circulating water cooling tower 35b, then introduced into the circulating water tank 36 again. For circulation process of this circulating water, the exhaust gas may be condensed inside the condenser 17 for condensing.

In this case, recycled water, that is, treated water, provided from the wastewater treatment unit 22 may be used as the circulating water for heat exchange in the condenser 17 for condensing.

Further, the system for producing biogas using a mixed liquid of digestive fluid treated water and dry feed includes a condenser 10 for heat exchange as a means for decreasing the temperature of the condensed wastewater to be sent to the wastewater treatment unit 22.

The condenser 10 for heat exchange serves to cool the high-temperature condensed wastewater having a temperature of about 65 to 75 °C discharged from the condenser 17 for condensing, which is configured to condense the high-temperature condensed wastewater that has undergone the condensation process, for example, the exhaust gas from the dryer side.

To this end, the system includes the condenser 10 for heat exchange through which the condensed wastewater inflows and outflows, wherein heat exchange between the condensed wastewater and circulating water are performed inside thereof, and further includes a circulating water tank 36a configured to store the circulating water supplied to the condenser 10 for heat exchange, a circulating water pump 38 configured to pump the circulating water, and a circulating water cooling tower 35a configured to cool the circulating water discharged from the condenser 10 for heat exchange and then send it to the circulating water tank 36a.

This condenser 10 for heat exchange includes a circulating water inlet into which low-temperature circulating water inflows and a circulating water outlet from which the circulating water after heat exchange outflows, as well as a condensed wastewater inlet into which high-temperature condensed wastewater inflows and a condensed wastewater outlet from which the low-temperature condensed wastewater after heat exchange outflows. In this case, indirect heat exchange between the circulating water and the condensed wastewater flowing into the condenser 10 for heat exchange may occur while they are not mixed with each other.

Here, the internal structure of the condenser 10 for heat exchange is the same as the internal structure of a general condenser applied to the dryer equipment, therefore will not be described in detail.

In addition, the condensed wastewater outlet of the condenser 10 for heat exchange is connected to the condensed wastewater tank 18b side by a line, such that the condensed wastewater whose temperature has been decreased through the condenser 10 for heat exchange may be sent to the condensed wastewater tank 18b through the line.

Accordingly, when the low-temperature circulating water and the high-temperature condensed wastewater simultaneously inflows into the condenser 10 for heat exchange, heat exchange between the circulating water and the condensed wastewater will occur inside the condenser 10 for heat exchange. As a result, the condensed wastewater with the decreased temperature may be sent to the condensed wastewater tank 18b of the wastewater treatment unit 22 side for comprehensive wastewater treatment along the line, and the circulating water with the increased temperature may be sent to the circulating water cooling tower 35a to be circulated.

Further, the system for producing biogas using a mixed liquid of digestive fluid treated water and dry feed includes a condensed wastewater tank 18b, a condensed wastewater line 19, and a condensed wastewater pump 20 as a means for supplying the condensed wastewater to the condenser 10 for heat exchange.

The condensed wastewater tank 18b is connected to a drain side of the condenser 17 for condensing and serves to store the high-temperature condensed wastewater discharged from the condenser 17 for condensing.

The condensed wastewater line 19 is a line connected between the condensed wastewater tank 18b and the condenser 10 for heat exchange. In this case, the condensed wastewater in the condensed wastewater tank 18b may be supplied toward the condenser 10 for heat exchange through the condensed wastewater line 19.

The condensed wastewater pump 20 is installed on the condensed wastewater line 19 and serves to pump the condensed wastewater.

Accordingly, the high-temperature condensed wastewater discharged from the condenser 17 for condensing is stored in the condensed wastewater tank 18b. When operating the condensed wastewater pump 20, the condensed wastewater in the condensed wastewater tank 18b is sent to the condenser 10 for heat exchange along the condensed wastewater line 19, and heat exchange between the high-temperature condensed wastewater sent in this way and the low-temperature circulating water supplied to the condenser 10 for heat exchange occurs. Therefore, the condensed wastewater is cooled to a predetermined temperature, for example, to a relatively low temperature than the temperature before heat exchange with the circulating water occurs, and then is sent to the condensed wastewater tank 18a of the wastewater treatment unit 22.

In addition, the system for producing biogas using a mixed liquid of digestive fluid treated water and dry feed includes the wastewater treatment unit 22 and a condensed wastewater tank 18a as a means for comprehensively treating the condensed wastewater discharged from the condenser 10 for heat exchange after completion of heat exchange therein, and then allowing it to utilize as process water in the drying system.

The condensed wastewater tank 18a serves to store the condensed wastewater discharged from the condenser 10 for heat exchange, that is, the condensed wastewater whose temperature has been decreased through heat exchange.

The wastewater treatment unit 22 serves to transform the condensed wastewater supplied from the condensed wastewater tank 18a into process water that can be used in the drying system through the comprehensive wastewater treatment process.

This wastewater treatment unit 22 includes a digestion tank 22a, an aeration tank 22b, a sedimentation tank 22c, and an advanced treatment tank 22d, which are arranged sequentially from the top. In this case, it is preferable that the sedimentation tank 22c includes a primary sedimentation tank and a secondary sedimentation tank.

In addition, the wastewater treatment unit 22 includes a treated water tank 23 configured to store the treated water discharged therefrom, and then supply it to the condenser 17 for condensing as use of circulating water.

Accordingly, the condensed wastewater that has completed heat exchange with the circulating water in the condenser 10 for heat exchange passes through the condensed wastewater tank 18a → the digestion tank 22a → the aeration tank 22b → the sedimentation tank 22c → the advanced treatment tank 22d sequentially, and then is stored in the treated water tank 23. When operating the pump, the treated water in the treated water tank 23 may be sent to the circulating water tank 36, thus to be reused as the circulating water for condensing the exhaust gas in the condenser 17 for condensing.

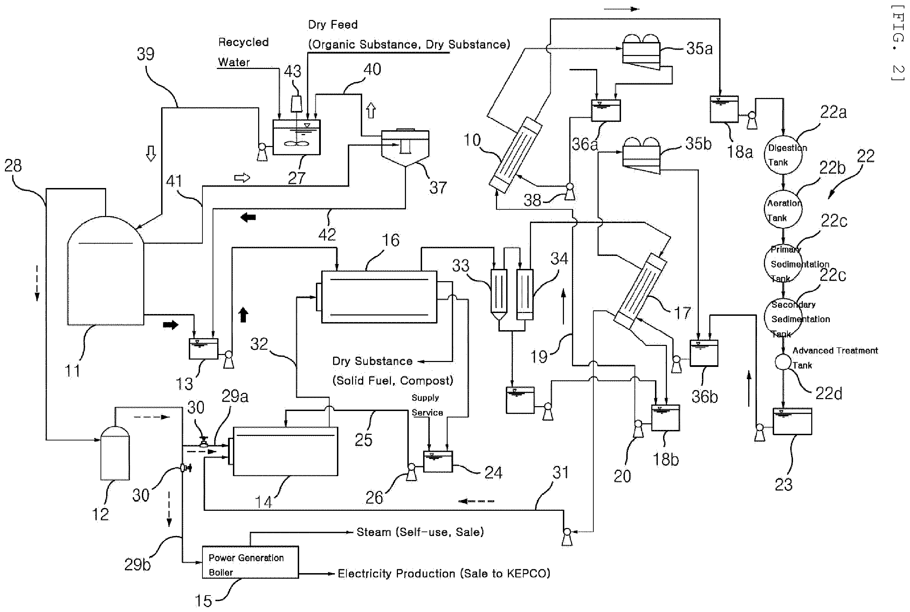

FIG. 2 is a process diagram showing the operating state of a system for producing biogas using a mixed liquid of digestive fluid treated water and dry feed according to an embodiment of the present invention.

As shown in FIG. 2, digestive fluid treated water and dry feed are added and mixed into the mixed liquid tank 27, and the liquid mixed in this way will be sent to the digestion tank 11.

The mixed liquid stays in the digestion tank 11, that is, the methane fermentation tank maintained at a medium temperature, and the methane gas generated in this process is collected in the gas holder 12, and then supplied to the deodorization combustion furnace 14 as an auxiliary fuel thereof, thereby reducing fuel costs. The steam generated from the deodorization combustion furnace 14 is supplied to the dryer 16, and used to dry digested slime, sludge, food waste, etc.

The digestive fluid treated after a predetermined residence time in the digestion tank 11 is sent to the sedimentation tank 37 and separated into solid and liquid. Then, the digestive fluid treated water at this time is reintroduced into the mixed liquid tank 27, and the digested slime in the digestion tank 11 and the sludge in the sedimentation tank 37 are introduced into the dryer 16 side to be dried.

The exhaust gas discharged during the drying process of the dryer 16 passes through the cyclone 33 and the trap 34, and then separated and discharged from the condenser 17 for condensing. The remaining gas containing odors is sent to the deodorization combustion furnace 14 to be incinerated along with air.

The dry material finally discharged from the dryer 16 is recycled through processes such as solidification into solid fuel and composting.

The temperature of the high-temperature condensed wastewater generated during the condensation process in the condenser 17 for condensing is decreased through heat exchange with the circulating water, and the condensed wastewater whose temperature has been decreased is supplied to the wastewater treatment unit 22 and is finally treated through the comprehensive wastewater treatment process. The treated water produced at this time is used as the circulating water for the condenser 17 for condensing.

In this way, the digested slime generated in the digestion tank and the sludge generated in the sedimentation tank are introduced into the dryer to be dried. Thereby, the finally discharged feed may be sold as solid fuel or compost, to reduce waste disposal costs and maximize biogas (methane) production. Therefore, costs may be reduced through electricity production and sales due to the operation of power generation boiler and steam energy production utilization, and waste disposal costs may be reduced by decreasing the amount of generated waste due to drying of sludge and sludge. As a result, it is possible to protect the Earth's environment by minimizing pollutants and contribute to the government's policy of reducing pollutant emissions.

As described above, in the present invention, by providing a new type of system which separates the digestive fluid discharged from an anaerobic digestion tank, which is a front-end process of the wastewater treatment system, into solid and liquid in a sedimentation tank, and then mixes the digestive fluid treated water with dry feed at a predetermined ratio and reintroduces it into the digestion tank, and also introduces digested slime and sludge into dryer equipment, it is possible to maximize the production of biogas (methane gas) to reduce energy costs, increase the production of dry substances to reduce waste disposal costs, and increase the resource recycling rate.

### [Description of Reference Numerals]

10: Condenser for heat exchange
11: Digestion tank
12: Gas holder
13: Storage tank
14: Deodorization combustion furnace
15: Power generation boiler
16: Dryer
17: Condenser for condensing
18a, 18b: Condensed wastewater tank
19: Condensed wastewater line
20: Condensed wastewater pump
22: Wastewater treatment unit
23: Treated water tank
24: Water supply tank
25: Water supply line
26: Water supply pump
27: Mixed liquid tank
28: Methane gas line
29a, 29b: Methane gas supply line
30: Valve
31: Condensed gas line
32: Steam line
33: Cyclone
34: Trap
35a, 35b: Circulating water cooling tower
36a, 36b: Circulating water tank
37: Sedimentation tank
38: Circulating water pump
39: Mixed liquid line
40: Digestive fluid treated water line
41: Digestive fluid line
42: Sludge line
43: Agitator

## Claims

1. A system for producing biogas using a mixed liquid of digestive fluid treated water and organic dry substance, the system comprising:
a mixed liquid tank 27 configured to mix and store digestive fluid treated water and organic dry substance;
a digestion tank 11 configured to decompose the mixed liquid of digestive fluid treated water and organic dry substance discharged from the mixed liquid tank 27;
a sedimentation tank 37 configured to separate a digestive fluid discharged from the digestion tank 11 into solid and liquid, then send digestive fluid treated water to the mixed liquid tank 27 and send sludge to a storage tank 13;
a gas holder 12 configured to store methane gas discharged from the digestion tank 11;
the storage tank 13 configured to store digested slime discharged from the digestion tank 11 and the sludge discharged from the sedimentation tank 37;
a deodorization combustion furnace 14 configured to use the methane gas discharged from the gas holder 12 as a fuel;
a power generation boiler 15 configured to use the methane gas discharged from the gas holder 12 as a fuel; and
a dryer 16 configured to dry food waste as well as the digested slime and sludge discharged from the storage tank 13,
wherein the digestive fluid treated water prepared by separating the digestive fluid discharged from the digestion tank into solid and liquid, and the organic dry substance are mixed at a predetermined ratio in the mixed liquid tank; then the mixture is retained and decomposed in the digestion tank; the methane gas produced in the digestion tank is used as a fuel for the deodorization combustion furnace and the power generation boiler; and the digested slime discharged from the digestion tank and the sludge discharged from the sedimentation tank are introduced into the dryer to be dried.

2. The system according to claim 1, comprising a means for cooling condensed wastewater discharged from a condenser 17 for condensing an exhaust gas discharged from the dryer 16, which comprises: a condenser 10 for heat exchange through which the condensed wastewater inflows and outflows, wherein heat exchange between the condensed wastewater and circulating water are performed inside thereof; a circulating water tank 36a configured to store the circulating water supplied to the condenser 10 for heat exchange; a circulating water pump 38 configured to pump the circulating water; and a circulating water cooling tower 35a configured to cool the circulating water discharged from the condenser 10 for heat exchange and then send it to the circulating water tank 36a.

3. The system according to claim 1 or 2, comprising: a condensed wastewater tank 18b configured to store the condensed wastewater discharged from the condenser 17 for condensing which is configured to condense the exhaust gas discharged from the dryer 16; a wastewater treatment unit 22 which comprises a digestion tank 22a, an aeration tank 22b, a sedimentation tank 22c, and an advanced treatment tank 22d as a means for treating the condensed wastewater discharged from the condensed wastewater tank 18b; and a treated water tank 23 configured to store the treated water discharged from the wastewater treatment unit 22 and then supply it to the condenser 17 for condensing as use of circulating water, wherein the condensed wastewater discharged from the condenser 17 for condensing is prepared as final treated water through the comprehensive wastewater treatment unit 22, and the resulting treated water is reused as circulating water for condensing the exhaust gas in the condenser for condensing.

4. The system according to claim 1, comprising: a water supply tank 24 configured to store steam condensate discharged from the dryer 16 and process water supplied from a water service; a water supply line 25 connected between the water supply tank 24 and the deodorization combustion furnace 14; a water supply pump 26 installed on the water supply line 25, wherein the steam condensate discharged from the dryer is used as water supply for the deodorization combustion furnace.

5. The system according to claim 1, wherein the steam produced by the power generation boiler 15 is introduced into the dryer 16 for self-use, such as drying food waste, digested slime, and sludge, or for sale to an external party.
